# EUROPÄISCHE PATENTSCHRIFT

(11) **EP 1 744 191 B1**
(45) Veröffentlichungstag und Bekanntmachung des Hinweises auf die Patenterteilung: **07.07.2010**
(21) Anmeldenummer: 06010604.4
(22) Anmeldetag: 23.05.2006
(51) Int. Cl.: G02B 6/44

(54) **Vorrichtung zur Abfangung von Kabeln**
Device for supporting cables
Dispositif destiné à la récupération de câbles

(30) Priorität: 15.08.2005 DE 202005012956 U; 22.06.2005 DE 202005009932 U
(43) Veröffentlichungstag der Anmeldung: 17.01.2007
(73) Patentinhaber: CCS Technology, Inc., Wilmington, DE 19803 (US)
(72) Erfinder: Syplacz, Roman, 58099 Hagen (DE); Kluwe, Wolf, 58119 Hagan (DE); Müller, Thorsten, 58708 Menden (DE)
(74) Vertreter: Sturm, Christoph

(56) Entgegenhaltungen:
- EP-A- 0 367 477
- EP-A- 0 505 104
- WO-A-00/72072
- WO-A-2005/020400
- AU-B2- 659 959
- US-A- 5 590 234
- US-A- 5 793 920

## Beschreibung

Die Erfindung betrifft eine Vorrichtung zur Abfangung von Kabeln, insbesondere von Mikrokabeln, nach dem Oberbegriff des Anspruchs 1.

Aus dem Stand der Technik ist es bereits bekannt Lichtwellenleiterkabelnetze aus Mikrokabeln bzw. Minikabeln aufzubauen. Derartige Mikrokabel bzw. Minikabel verfügen über einen Außendurchmesser bis max. in etwa 7 mm. Beim Aufbau derartiger Lichtwellenleiterkabelnetze ist es erforderlich, sogenannte Verbindungsstellen bzw. Abzweigstellen für die Mikrokabel vorzusehen, wobei an den Verbindungsstellen bzw. Abzweigstellen Spleiße zwischen in Mikrokabeln geführten Lichtwellenleitern ausgebildet werden. Zum Schutz der Spleißverbindungen an den Verbindungsstellen bzw. Abzweigstellen werden die Spleißverbindungen in sogenannten Kabelmuffen abgelegt, wobei die Mikrokabel in eine Kabelmuffe eingeführt und innerhalb der Kabelmuffe gegenüber einer Zugbeanspruchung sowie gegebenenfalls auch Torsionsbeanspruchung abgefangen werden müssen. Gleiches gilt auch für Kabel mit einem größeren Außendurchmesser.

Als Stand der Technik, der eine Vorrichtung zur Abfangung von Kabeln mit den Merkmalen des Oberbegriffs des Anspruchs 1 zeigt, sei auf die EP-A-0 367 477 verwiesen.

Hiervon ausgehend liegt der vorliegenden Erfindung das Problem zu Grunde, eine neuartige Vorrichtung zur Abfangung von Kabeln zu schaffen.

Dieses Problem wird eine Vorrichtung zur Abfangung von Kabeln gemäß Anspruch 1 gelöst.

Vorzugsweise weist das Abfangelement für die Kabel eine Ausnehmung auf, in welche ein Lagerungsmodul einer Lagerungseinrichtung einführbar ist, um die Vorrichtung zur Abfangung von Kabeln an dem Lagerungsmodul zu befestigen und über das Lagerungsmodul bzw. die Lagerungseinrichtung an einer Verteilereinrichtung, insbesondere an einem Dichtkörper einer Kabelmuffe, zu lagern.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: eine perspektivische Ansicht einer erfindungsgemäßen Vorrich- tung zur Abfangung von Mikrokabeln nach einem Ausführungs- beispiel der Erfindung zusammen mit einer Lagerungseinrich- tung zur Lagerung der erfindungsgemäßen Vorrichtung an einer Lichtwellenleiterverteilereinrichtung;
- Fig. 2:: die Anordnung gemäß Fig. 1 mit lediglich einem Mikrokabel;
- Fig. 3 bis 5:: Einzelteile der erfindungsgemäßen Vorrichtung zur Abfangung von Mikrokabeln;
- Fig. 6 und 7:: Einzelteile der Lagerungseinrichtung zur Lagerung der erfin- dungsgemäßen Vorrichtung an einer Lichtwellenleiterverteiler- einrichtung.

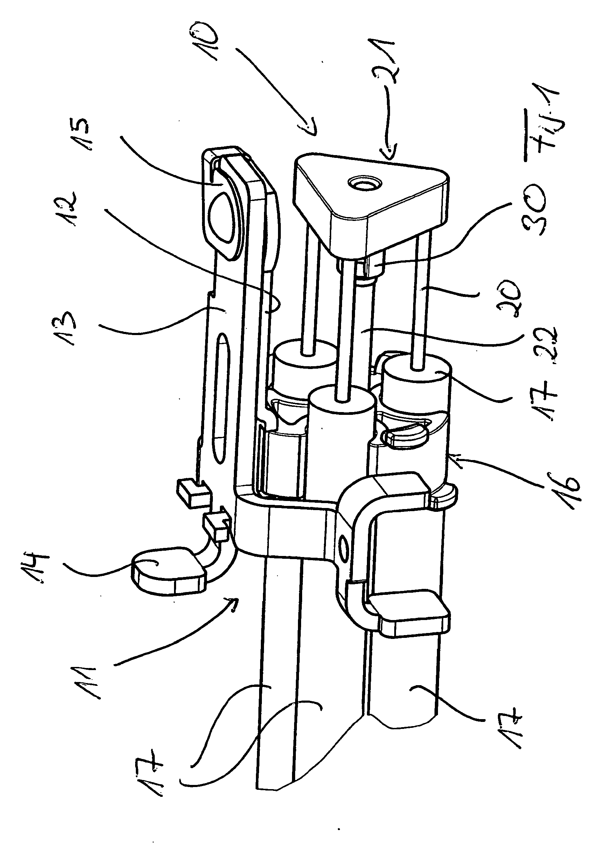

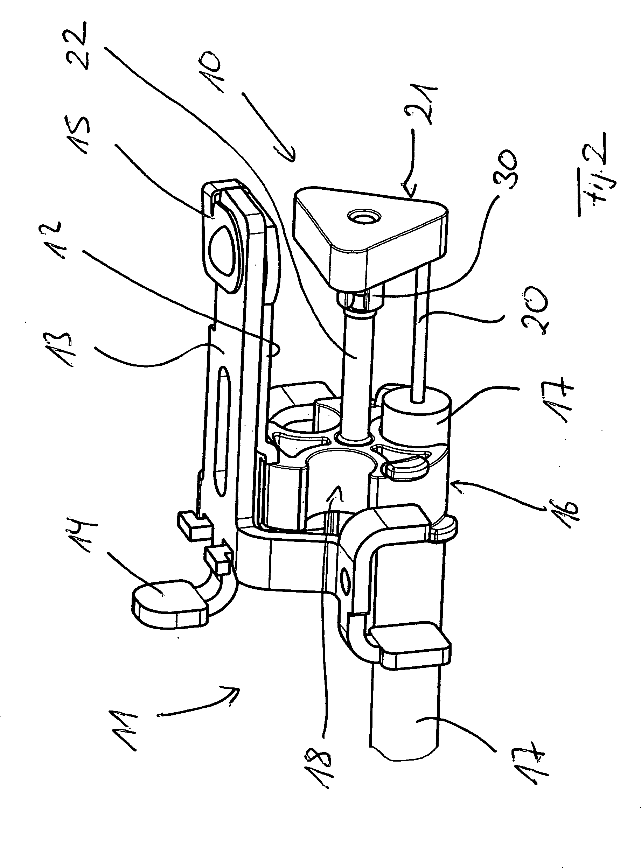

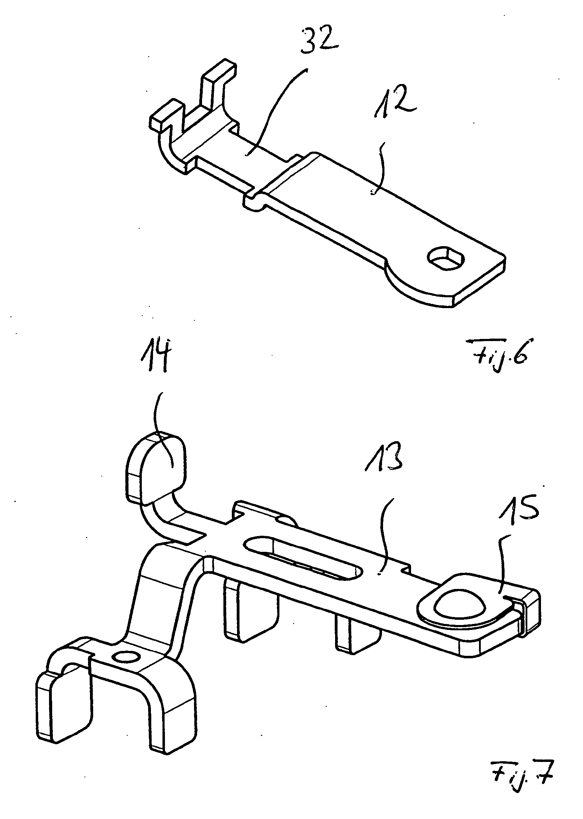

Nachfolgend wird die Erfindung unter Bezugnahme auf Fig. 1 bis 7 am Beispiel der Abfangung von Mikrokabeln in größerem Detail beschrieben.

Fig. 1 bis 7 zeigen ein bevorzugtes Ausführungsbeispiel einer erfindungsgemäßen Vorrichtung 10 zur Abfangung von Mikrokabeln zusammen mit einer Lagerungseinrichtung 11 über welche die erfindungsgemäße Vorrichtung 10 an einer nicht-dargestellten Lichtwellenleiterverteilereinrichtung, vorzugsweise an einem Dichtkörper einer Kabelmuffe, gelagert werden kann. Die Lagerungseinrichtung 11 wird aus zwei Baugruppen gebildet, nämlich aus einem Lagerungsmodul 12 und einer Lagerungsbasis 13. Über das Lagerungsmodul 12 ist die erfindungsgemäße Vorrichtung 10 zur Abfangung von Mikrokabeln an der Lagerungseinrichtung 11 befestigbar. Über die Lagerungsbasis 13 hingegen ist die Lagerungseinrichtung 11 zusammen mit der erfindungsgemäßen Vorrichtung 10 an der Lichtwellenleiterverteilereinrichtung, vorzugsweise am Dichtkörper einer Kabelmuffe, lagerbar, wobei hierzu ein Vorsprung 14 der Lagerungsbasis 13 in eine auf einer Innenseite des Dichtkörpers einer Kabelmuffe positionierte Führung eingreift. Das Lagerungsmodul 12 sowie die Lagerungsbasis 13 der Lagerungseinrichtung 11 sind über ein Verbindungselement 15 miteinander verbindbar, welches im gezeigten Ausführungsbeispiel als Drehclip ausgeführt ist. An dieser Stelle sei darauf hingewiesen, dass die Lagerungseinrichtung 11, die vom Lagerungsmodul 12 und der Lagerungsbasis 13 gebildet wird, lediglich der Lagerung bzw. Anbindung der erfindungsgemäßen Vorrichtung 10 zur Abfangung von Mikrokabeln in einer bzw. an einer vorzugsweise als Kabelmuffe ausgebildeten Lichtwellenleiterverteilereinrichtung dient.

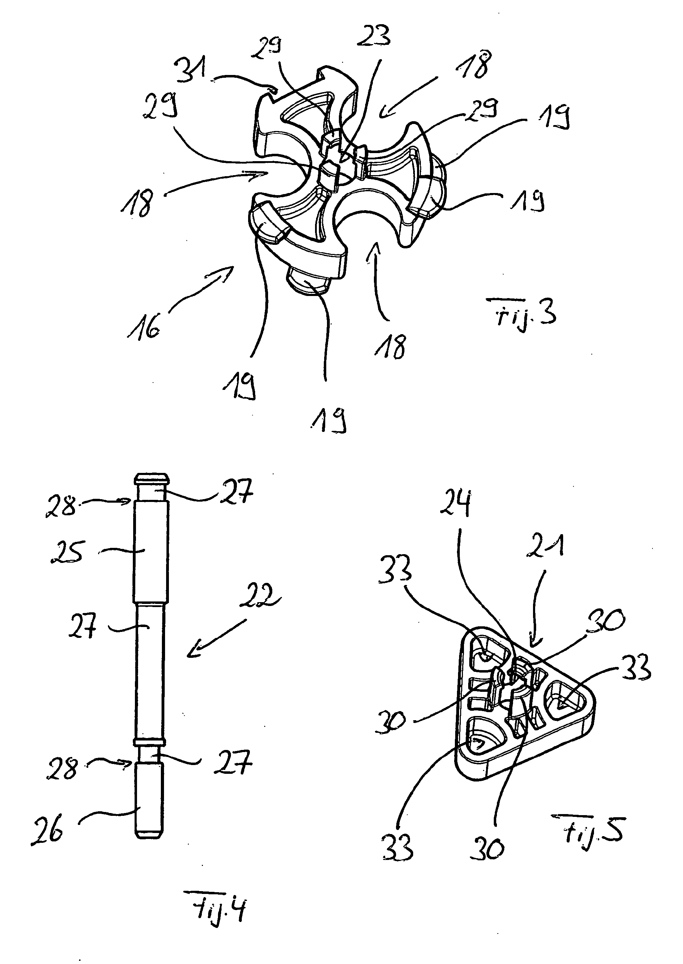

Die erfindungsgemäße Vorrichtung 10 zur Abfangung von Mikrokabeln verfügt über mindestens ein Abfangelement. Ein erstes Abfangelement 16 dient der Zugabfangung und Torsionsabfangung mindestens eines Mikrokabels 17, wobei gemäß Fig. 1 bis 7 in dem ersten Abfangelement 16 insgesamt drei Mikrokabel 17 abgefangen werden können. Hierzu verfügt das erste Abfangelement 16 (siehe Fig. 3) über drei kreissegmentförmige Aufnahmeöffnungen 18, wobei in jede kreissegmentförmige Aufnahmeöffnung 18 jeweils ein Mikrokabel 17 in Radialrichtung des Abfangelements 16 einsteckbar bzw. einrastbar ist.

Die kreissegmentförmigen Aufnahmeöffnungen 18 des Abfangelements 16 sind vorzugsweise über den Umfang des ringförmig ausgebildeten Abfangelements 16 gleichverteilt positioniert. Das Abfangelement 16 kann auch als Abfangstern bezeichnet werden.

An dieser Stelle sei darauf hingewiesen, dass die in das erste Abfangelement 16 eingesteckten Mikrokabel 17 in ihrer Position am Abfangelement 16 vorzugsweise über eine nicht-dargestellte Schelle bzw. einen Kabelbinder gesichert bzw. fixiert werden, wobei sich die nicht-dargestellte Schelle in Umfangsrichtung um das Abfangelement 16 herum erstreckt und in Axialposition auf dem Abfangelement 16 über sich in radialer Richtung erstreckende Vorsprünge 19 geführt bzw. gesichert wird.

In dem Fall, in welchem mit der erfindungsgemäßen Vorrichtung 10 Mikrokabel 17, die ein Zentralelement 20 umfassen, abgefangen werden sollen, verfügt die erfindungsgemäße Vorrichtung 10 neben dem ersten Abfangelement 16 über ein zweites Abfangelement 21 zur Abfangung der Zentralelemente 10 der Mikrokabel 17. Das zweite Abfangelement 21 zur Zugabfangung und Torsionsabfangung der Zentralelemente 20 ist dann zusammen mit dem ersten Abfangelement 16 zur Abfangung der Mikrokabel 17 auf einem Befestigungselement 22 mit Abstand von dem ersten Abfangelement 16 befestigt bzw. gelagert. Zur Abfangung der Zentralelemente 20 sind in das zweite Abfangelement 21 drei Aufnahmeöffnungen 33 für jeweils ein Zentralelement 20 integriert, in welche die Zentralelemente 20 in Axialrichtung einführbar sind.

Das Befestigungselement 22 ist, wie insbesondere Fig. 4 zeigt, als stabförmige Befestigungsachse ausgebildet, wobei die Abfangelemente 16 und 21 über in dieselben integrierte Bohrungen 23 bzw. 24 auf das Befestigungselement 22 aufgeschoben bzw. aufgesteckt werden können. Wie Fig. 4 entnommen werden kann, verfügt das Befestigungselement 22 über Abschnitte zur Aufnahme bzw. Lagerung der Abfangelemente 16 sowie 21, wobei ein Abschnitt 25 der Aufnahme bzw. Lagerung des ersten Abfangelements 16 zur Abfangung der Mikrokabel 17 und ein zweiter Abschnitt 26 der Aufnahme bzw. Lagerung des zweiten Abfangelements 21 zur Abfangung Zentralelemente 20 dient.

Der Außendurchmesser der Abschnitte 25 und 26 ist dabei an den Innendurchmesser der Bohrungen 23 und 24 der Abfangelemente 16 und 21 angepasst, wobei sich an die Abschnitte 25 und 26 des Befestigungselements 22 unmittelbar anschließende Abschnitte 27 desselben einen verringerten Außendurchmesser aufweisen, so dass sich an die Abschnitte 25 und 26 jeweils ein stufenartiger Absatz 28 anschließt. Mit den Absätzen 28 wirken widerhakenartige Verankerungselemente 29 bzw. 30 der Abfangelemente 16 und 21 zusammen, um die Abfangelemente 16 und 21 in ihre Relativposition zueinander auf dem Befestigungselement 22 zu fixieren. Wie am besten Fig. 3 entnommen werden kann, sind in montierter Position die widerhakenartige Verankerungselemente 29 und 30 an voneinander abgewandten Seiten der Abfangelemente 16 sowie 21 angeordnet.

Das in Fig. 1 bis 7 dargestellte Ausführungsbeispiel einer erfindungsgemäßen Vorrichtung 10 zur Abfangung von Mikrokabeln dient der Abfangung von insgesamt drei Mikrokabeln 17, wobei jedes Mikrokabel 17 ein Zentralelement 20 aufweist. Zur Abfangung der drei Mikrokabel 17 dient das erste Abfangelement 16. Zur Abfangung der drei Zentralelemente 20 dient das zweite Abfangelement 21, wobei beide Abfangelemente 16 und 21 mit Abstand voneinander gemeinsam auf dem Befestigungselement 22 gelagert sind.

Es sind auch Ausführungsbeispiele möglich, in welchen mehr als drei oder auch weniger als drei Mikrokabel abgefangen werden. So kann zum Beispiel das erste Abfangelement vier kreissegmentförmige Aufnahmeöffnungen zur Abfangung von vier Mikrokabeln aufweisen. Die Anzahl der kreissegmentförmigen Aufnahmeöffnungen im Abfangelement ist nahezu beliebig wählbar und lediglich von geometrischen Rahmenbedingungen abhängig.

Am ersten Abfangelement 16 ist das Lagerungsmodul 12 der Lagerungseinrichtung 11 befestigbar, um die erfindungsgemäße Vorrichtung 10 zum Beispiel an einen Dichtkörper einer Kabelmuffe zu lagern. Hierzu weist das erste Abfangelement 16 eine Ausnehmung 31 (siehe Fig. 3) auf, in welche das Lagerungsmodul 21 mit einem Abschnitt 32 einführbar ist, wobei in montiertem Zustand die nicht-dargestellte Schelle, welche die Mikrokabel 17 am ersten Abfangelement 16 gesichert bzw. fixiert, auch für die Fixierung der Vorrichtung 10 am Lagerungsmodul 12 sorgt.

Mit Hilfe der in Fig. 1 bis 7 dargestellten, erfindungsgemäßen Vorrichtung sind Mikrokabel sicher sowie einfach im Bereich einer Lichtwellenleiterverteilereinrichtung, insbesondere im Bereich einer Kabelmuffe, abfangbar. Sämtliche Baugruppen der erfindungsgemäßen Vorrichtungen sind im Sinne eines Plug and Play-Prinzips ineinander einsteckbar, so dass zur Montage bzw. Abfangung von Mikrokabeln keine speziellen Werkzeuge erforderlich sind. Zur zusätzlichen Fixierung der Mikrokabel im Bereich der jeweiligen Abfangelemente werden vorzugsweise Schraubschellen bzw. Kabelbinder um die Abfangelemente gespannt, um so die Abfangung zu optimieren. Über mit den Vorrichtungen zusammenwirkende Lagerungseinrichtungen sind die erfindungsgemäßen Vorrichtungen einfach im Bereich einer Lichtwellenleiterverteilereinrichtung befestigbar bzw. lagerbar.

### Bezugszeichenliste

- 10: Vorrichtung
- 11: Lagerungseinrichtung
- 12: Lagerungsmodul
- 13: Lagerungsbasis
- 14: Vorsprung
- 15: Verbindungselement
- 16: erstes Abfangelement
- 17: Mikrokabel
- 18: Aufnahmeöffnung
- 19: Vorsprung
- 20: Zentralelement
- 21: zweites Abfangelement
- 22: Befestigungselement
- 23: Bohrung
- 24: Bohrung
- 25: Abschnitt
- 26: Abschnitt
- 27: Abschnitt
- 28: Absatz
- 29: Verankerungselement
- 30: Verankerungselement
- 31: Ausnehmung
- 32: Abschnitt
- 33: Aufnahmeöffnung

## Patentansprüche

1. Vorrichtung zur Abfangung von Kabeln, insbesondere von Mikrokabeln bzw. Minikabeln, mit einem Abfangelement (16) zur Abfangung mindestens eines Kabels (17), wobei das Abfangelement (16) mindestens eine kreissegmentförmige Aufnahmeöffnung (18) aufweist, und wobei in jede kreissegmentförmige Aufnahmeöffnung (18) des Abfangelements (16) jeweils ein Kabel (17) einsteckbar bzw. einrastbar ist, **gekennzeichnet durch** ein weiteres Abfangelement (21) zur Abfangung eines Zentralelements (20) des oder jedes Kabels (17), wobei das weitere Abfangelement (21) zusammen mit dem Abfangelement (16) für die Kabel (17) an einem gemeinsamen Befestigungselement (22) gelagert ist, wobei das Befestigungselement (22) zur Aufnahme bzw. Lagerung der Abfangelemente (16, 21) als stabförmige Befestigungsachse ausgebildet ist, welche in Ausnehmungen bzw. Bohrungen (23, 24) der Abfangelemente (16, 21) geführt ist, wobei die Befestigungsachse Abschnitte (25, 26) zur Lagerung der Abfangelemente (16, 21) aufweist, deren Aussendruchmesser an den Innendurchmesser der Bohrung (23, 24) in dem aufzunehmenden Abfangelement (16, 21) angepasst ist, und wobei die Position der Abfangelemente (16, 21) auf den Abschnitten (25, 26) des Befestigungselements (22) **durch** widerhakenartige Verankerungselemente (29, 30) gesichert ist, die mit im Bereich der Abschnitte (25, 26) ausgebildeten Absätzen (28) zusammenwirken.

2. Vorrichtung nach Anspruch 1, **dadurch gekennzeichnet, dass** das Abfangelement (16) für die Zugabfangung und Torsionsabfangung der Kabel (17) über den Umfang derselben verteilt mehrere kreissegmentförmige Aufnahmeöffnung (18) aufweisen, in welche jeweils ein Kabel (17) in Radialrichtung einsteckbar bzw. einrastbar ist.

3. Vorrichtung nach Anspruch 1 oder 2, **dadurch gekennzeichnet, dass** das oder jedes in das Abfangelement (16) einsteckte Kabel (17) über einen Kabelbinder oder eine Schelle in ihrer Position am Abfangelement (16) gesichert ist, wobei der Kabelbinder oder die Schelle in der Axialposition am Abfangelement (16) über sich in radialer Richtung erstreckende Vorsprünge (19) geführt ist.

4. Vorrichtung nach einem oder mehreren der Ansprüche 1 bis 3, **dadurch gekennzeichnet, dass** das Abfangelement (16) für die Kabel (17) eine Ausnehmung (31) aufweist, in welche ein Lagerungsmodul (12) einer Lagerungseinrichtung (11) einführbar ist, um die Vorrichtung zur Abfangung von Kabeln (17) an dem Lagerungsmodul (12) zu befestigen und über das Lagerungsmodul (12) bzw. die Lagerungseinrichtung (11) an einer Verteilereinrichtung, insbesondere an einem Dichtkörper einer Kabelmuffe, zu lagern.

5. Vorrichtung nach Anspruch 4, **dadurch gekennzeichnet, dass** das Abfangelement (16) für die Kabel (17) in der Position am Lagerungsmodul (12) über den Kabelbinder oder die Schelle gesichert ist, die auch die Kabel (17) in ihrer Position am Abfangelement (16) gesichert.

6. Vorrichtung nach Anspruch 1, **dadurch gekennzeichnet, dass** das weitere Abfangelement (21) mindestens eine Aufnahmeöffnung (33) aufweist, wobei in jede Aufnahmeöffnung (33) des Abfangelements (21) jeweils ein Zentralelement (20) eines Kabel (17) in Axialrichtung einsteckbar ist.

## Claims

1. Apparatus for securing cables, in particular micro cables or mini cables, having a securing element (16) for securing at least one cable (17), wherein the securing element (16) has at least one holding opening (18) which is in the form of a circle segment, and wherein in each case one cable (17) can be inserted and/or latched into each holding opening (18), which is in the form of a circle segment, of the securing element (16), **characterized by** a further securing element (21) for securing a central element (20) of the or each cable (17), wherein the further securing element (21) is mounted together with the securing element (16) for the cables (17) on a common attachment element (22), wherein the attachment element (22) for holding and/or bearing the securing element (16, 21) is an attachment shaft in the form of a rod, which is guided in recesses and/or holes (23, 24) in the securing elements (16, 21), wherein the attachment shaft has sections (25, 26) for bearing the securing elements (16, 21) the external diameter of which sections (25, 26) is matched to the internal diameter of the hole (23, 24) in the securing element (16, 21) to be held, and wherein the position of the securing elements (16, 21) on the sections (25, 26) of the attachment element (22) is secured by anchoring elements (29, 30) which are like barbs and interact with steps (28) which are formed in the area of the sections (25, 26).

2. Apparatus according to Claim 1, **characterized in that** the securing element (16) has a plurality of holding openings (18), which are in the form of circle segments and are distributed over the circumference of the cables (17) as strain relief and torsion relief for the cables (17), into each of which holding openings (18) one cable (17) can be inserted and/or latched in the radial direction.

3. Apparatus according to Claim 1 or 2, **characterized in that** the or each cable (17) which is inserted into the securing element (16) is secured in its position on the securing element (16) via a cable tie or a clamp, wherein the cable tie or the clamp is guided by means of projections (19) which extend in the radial direction, in the axial position on the securing element (16).

4. Apparatus according to one or more of Claims 1 to 3, **characterized in that** the securing element (16) for the cables (17) has a recess (31) into which a bearing module (12) of a bearing device (11) can be inserted, in order to attach the apparatus for securing cables (17) to the bearing module (12) and for bearing via the bearing module (12) or the bearing device (11) on a distributor device, in particular on a sealing body of a cable sleeve.

5. Apparatus according to Claim 4, **characterized in that** the securing element (16) for the cables (17) is secured in the position on the bearing module (12) via the cable tie or the clamp, which also secures the cables (17) in their position on the securing element (16).

6. Apparatus according to Claim 1, **characterized in that** the further securing element (21) has at least one holding opening (33), wherein a central element (20) of one cable (17) can be inserted in the axial direction in each case into each holding opening (33) in the securing element (21).

## Revendications

1. Dispositif pour récupérer des câbles, notamment des micro-câbles ou des mini-câbles, comprenant un élément de récupération (16) pour récupérer au moins un câble (17), l'élément de récupération (16) présentant au moins une ouverture de réception (18) en forme de segment de cercle, et un câble (17) pouvant à chaque fois être inséré ou encliqueté dans chaque ouverture de réception (18) en forme de segment de cercle de l'élément de récupération (16), **caractérisé par** un autre élément de récupération (21) pour récupérer un élément central (20) du ou de chaque câble (17), l'autre élément de récupération (21) étant monté conjointement avec l'élément de récupération (16) pour les câbles (17) sur un élément de fixation commun (22), l'élément de fixation (22) étant réalisé sous forme d'axe de fixation en forme de barre pour recevoir ou supporter les éléments de récupération (16, 21), lequel axe de fixation est guidé dans des évidements ou des alésages (23, 24) des éléments de récupération (16, 21), l'axe de fixation présentant des portions (25, 26) pour le support des éléments de récupération (16, 21), dont le diamètre extérieur est adapté au diamètre intérieur de l'alésage (23, 24) dans l'élément de récupération (16, 21) à recevoir, et la position des éléments de récupération (16, 21) sur les portions (25, 26) de l'élément de fixation (22) étant fixée par des éléments d'ancrage (29, 30) en forme de barbes, qui coopèrent avec des épaulements (28) réalisés dans la région des portions (25, 26).

2. Dispositif selon la revendication 1, **caractérisé en ce que** l'élément de récupération (16) pour récupérer la traction et récupérer la torsion des câbles (17) présente plusieurs ouvertures de réception (18) réparties sur sa périphérie, dans lesquelles à chaque fois un câble (17) peut être enfoncé ou encliqueté dans la direction radiale.

3. Dispositif selon la revendication 1 ou 2, **caractérisé en ce que** le ou chaque câble (17) inséré dans l'élément de récupération (16) est fixé par le biais d'une connexion de câble ou d'un collier dans sa position sur l'élément de récupération (16), la connexion de câble ou le collier étant guidé dans la position axiale sur l'élément de récupération (16) par le biais de saillies (19) s'étendant dans la direction radiale.

4. Dispositif selon l'une quelconque ou plusieurs des revendications 1 à 3, **caractérisé en ce que** l'élément de récupération (16) pour les câbles (17) présente un évidement (31) dans lequel un module de support (12) d'un dispositif de support (11) peut être introduit, afin de fixer le dispositif pour récupérer des câbles (17) sur le module de support (12) et de le supporter par le biais du module de support (12) ou du dispositif de support (11) sur un dispositif distributeur, notamment un corps d'étanchéité d'un manchon de câble.

5. Dispositif selon la revendication 4, **caractérisé en ce que** l'élément de récupération (16) pour les câbles (17) est fixé en position sur le module de support (12) par le biais de la connexion de câble ou du collier, qui fixe également les câbles (17) dans leur position sur l'élément de récupération (16).

6. Dispositif selon la revendication 1, **caractérisé en ce que** l'autre élément de récupération (21) présente au moins une ouverture de réception (33), à chaque fois un élément central (20) d'un câble (17) pouvant être enfiché dans la direction axiale dans chaque ouverture de réception (33) de l'élément de récupération (21).
